# EUROPÄISCHE PATENTSCHRIFT

(11) **EP 2 113 448 B1**
(45) Veröffentlichungstag und Bekanntmachung des Hinweises auf die Patenterteilung: **01.11.2017**
(21) Anmeldenummer: 09158424.3
(22) Anmeldetag: 22.04.2009
(51) Int. Cl.: B62D 29/04, B62D 25/08, B62D 25/14

(54) **Integriertes Verbundbauteil eines Kraftfahrzeugs und Verfahren zur Herstellung eines integrierten Verbundbauteils**
Integrated composite component of a motor vehicle and method for producing an integrated composite component
Composant composite intégré d'un véhicule automobile et procédé de fabrication d'un tel composant composite intégré

(30) Priorität: 28.04.2008 DE 102008021103
(43) Veröffentlichungstag der Anmeldung: 04.11.2009
(73) Patentinhaber: International Automotive Components Group GmbH, 40472 Düsseldorf (DE)
(72) Erfinder: Bergers, Helmut, 47929, Grefrath (DE); Franssen, Wim J.H., 6031, SC Nederweert (NL); Seegers, Huib, 5029, PG Eindhoven (NL)
(74) Vertreter: Liesegang, Eva

(56) Entgegenhaltungen:
- DE-C1- 4 409 081
- US-A- 5 358 300
- US-A1- 2003 089 545
- US-A1- 2004 113 460
- US-A1- 2004 188 885
- US-B1- 6 695 374

## Beschreibung

Die Erfindung betrifft im Allgemeinen den Karosserieaufbau eines Kraftfahrzeugs und spezieller den Aufbau der Fahrzeugkarosserie im Frontbereich der Fahrzeugkabine.

In der Automobilindustrie ist es bekannt, im Frontbereich der Fahrzeugkabine eine Stirnwand oder "Firewall" zwischen der Fahrzeugkabine und dem Motorraum vorzusehen, um eine feuerfeste Abtrennung des Motorraums von dem Passagierraum sicherzustellen. Diese Stirnwand besteht im Stand der Technik in der Regel aus einem Metallblech.

Ebenfalls im Frontbereich der Fahrzeugkabine befindet sich ein Querträger, der als Teil der Fahrzeugkarosserie zwischen den sogenannten A-Säulen unterhalb der Windschutzscheibe etwa horizontal verlaufend angeordnet ist. Der Querträger dient zur Befestigung und Aussteifung der Instrumententafel, die üblicherweise aus Kunststoff-, Faser- und/oder Holzbauteilen aufgebaut ist. An dem Querträger sind Halterungen zur Befestigung der Instrumententafel sowie weiterer Komponenten des Kraftfahrzeugs, wie einer Mittelkonsole und der Lenkeinrichtung, angebracht.

Im Stand der Technik ist es auch bekannt, mit dem Querträger sogenannte "Zitterstreben" zu verbinden, die den Querträger an dem Karosserieboden abstützen, um Vibrationen der Instrumententafel zu vermeiden.

Beispiele für die Gestaltung von Querträgern findet man in der DE 198 45 146 A1 und in der WO 2005/097581 A1.

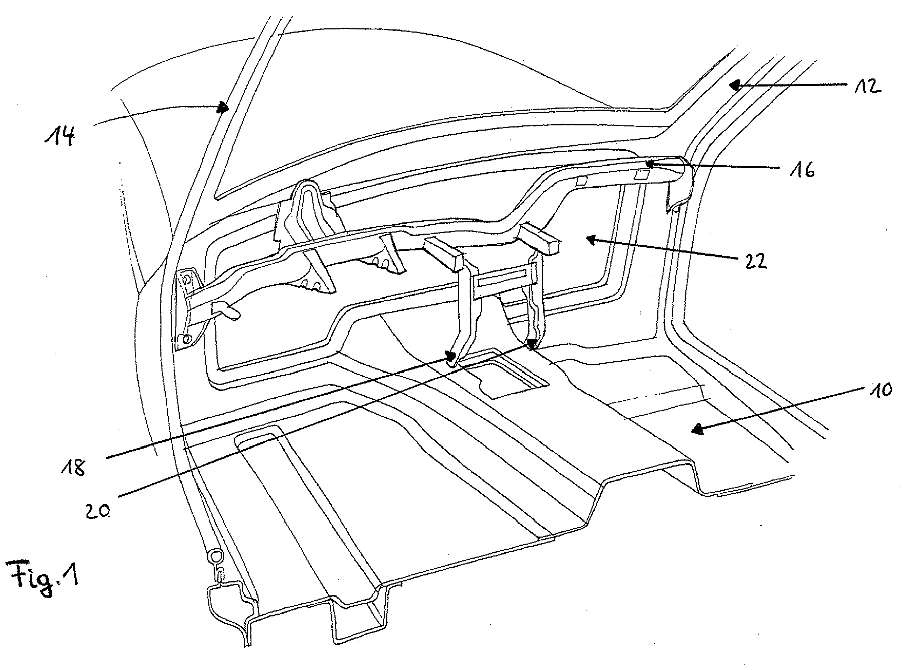

Ein Beispiel für den Aufbau der Kraftfahrzeugkarosserie im Frontbereich der Fahrzeugkabine gemäß dem Stand der Technik ist in Fig. 1 gezeigt. Fig. 1 zeigt schematisch den Karosserieaufbau im Frontbereich der Fahrzeugkabine eines Kraftfahrzeuges, mit einem Karosserieboden 10, der rechten und der linkem A-Säule 12, 14, einem Querträger 16, der zwischen den beiden A-Säulen 12, 14, angeordnet ist, zwei Zitterstreben 18, 20, welche den Querträger 16 an dem Karosserieboden 10 abstützen, und einer Stirnwand 22, im Karosseriebau auch als "Firewall" bezeichnet, die eine feuerfeste Trennwand zwischen der Fahrzeugkabine und dem Motorraum bildet.

Sämtliche Karosseriebauteile bestehen im Stand der Technik aus Metall. So wird die Stirnwand 22 aus einem Metallblech hergestellt, der Querträger 16 und die Zitterstreben 18 bestehen ebenfalls aus Metallprofilen. Zur Gewichtsersparnis kommen Leichtmetalle, wie Aluminium, Aluminium- oder Magnesiumlegierungen, sowie Kombinationen aus Metall und Kunststoff zum Einsatz.

An dem Querträger 16 und den Zitterstreben 18, 20 sind Halterungen zur Befestigung derselben sowie zur Anbringung der Instrumententafel und weiterer Komponenten der Fahrzeugkabine, wie der Mittelkonsole, Lenksäule und dergleichen, angebracht. Die Montage der genannten Komponenten ist aufwendig.

US-A-5,358,300 beschreibt eine modulare Anordnung mit drei Bauteilen, die kombiniert werden, um die Stirnwand der Fahrzeugkabine eines Kraftfahrzeuges und den darüber liegenden Querträger mit ausreichender Steifheit zwischen den A-Säulen des Kraftfahrzeuges zu bilden. Die drei Bauteile bestehen aus einem faserverstärkten thermoplastischen Kunststoff. Der mehrteilige Aufbau ermöglicht die Integration eine Vielzahl von Kanälen für die Belüftung, Heizung und Klimatisierung des Fahrzeuginneren. Die drei Bauteile müssen hierzu außerhalb des Fahrzeugs vormontiert werden, wodurch sich der Fertigungsaufwand erhöht.

US 2003/0089545 A1 beschreibt ein integrietes Verbundbauteil und dessen Herstellungsverfahren gemäß dem Oberbegriff des Anspruchs 1 bzw. 8. DE 44 09 081 C1 beschreibt eine Baueinheit für die Stirnwand der Fahrzeugkabine, deren tragende Substanz aus zwei Verbundteilen aus tiefgezogenem Blech gebildet ist. Das Blechteil der Stirnwand ist einteilig ausgebildet. Das darüber liegende Blechteil des Instrumententafelträgers ist aus drei vorgefertigten Einzelteilen aus Blech zusammen geschweißt und umfasst den Querträger, eine Konsole und eine Aufnahme für die Lenksäule. Die einzelnen Teile werden durch Schweißen miteinander verbunden, wodurch ebenfalls ein hoher Fertigungsaufwand entsteht.

Ausgehend von diesem Stand der Technik ist es eine Aufgabe der Erfindung, den Frontbereich der Fahrzeugkabine eines Kraftfahrzeuges so zu gestalten, dass Herstellung und Montage der Komponenten weniger aufwendig sind als im Stand der Technik.

Diese Aufgabe wird durch ein integriertes Verbundbauteil gemäß Patentanspruch 1 sowie durch ein Verfahren zur dessen Herstellung gemäß Patentanspruch 8 gelöst.

Die Erfindung sieht ein integriertes Verbundbauteil für den Frontbereich der Fahrzeugkabine eines Kraftfahrzeugs vor, das aus einem einteiligen Faserverbundhalbzeug aus einem faserverstärkten thermoplastischen Kunststoff hergestellt ist, welches derart geformt wird, das es sowohl die Stirnwand der Fahrzeugkabine als auch der Querträger oberhalb der Stirnwand bildet. Mit anderen Worten werden die Funktionen dieser zwei bisher separaten Baugruppen in einem einzigen Bauteil zusammengefasst, welches aus einem Faserverbundhalbzeug geformt, insbesondere gepresst wird. Eine Versteifungsstruktur aus Kunststoff ist erfindungsgemäß unmittelbar an das Faserverbundhalbzeug angespritzt und verbindet sich mit diesem zu einem einheitlichen hocheigensteifen Bauteil.

Das Faserverbundhalbzeug ist vorzugsweise aus einer faserverstärkten thermoplastischen Kunststoffmatrix aufgebaut, wobei der thermoplastische Kunststoff ein Polyamid, Polypropylen (PP), thermoplastisches Polyurethan (TPU), Polyetheretherketon (PEEK), Polyphenylensulfid (PPS) oder ein ähnliches Material sein kann. Das Faserverbundhalbzeug weist in diesem Kunststoff eingebettete Verstärkungsfasern aus Glas, Kohlenstoff oder Aramid auf, wobei besonders gute Ergebnisse mit Glasfasern erzielt werden, welche als Endlosfasern oder Gewebe ausgebildet sind. In einer vorteilhaften Ausführung ist das Faserverbundhalbzeug eine thermoplastgetränkte Glasfasermatte, die erwärmt und in einem Presswerkzeug in die gewünschte Form gebracht wird.

Ein Faserverbundhalbzeug, das erfindungsgemäß zum Herstellen des integrierten Verbundbauteils zum Einsatz kommen kann, ist im Stand der Technik unter der Bezeichnung "Organoblech" bekannt und wird beispielsweise von der Bond-Laminates GmbH, Brilon Deutschland hergestellt. Dieser Werkstoff wird beispielsweise in Schutzhelmen, Skischuhen und in Stossfängern von Kraftfahrzeugen eingesetzt. Die Integration mehrerer Baugruppen zu einem neuen integrierten Verbundbauteil ist durch den Stand der Technik nicht vorgezeichnet.

Da das erfindungsgemäße Verbundbauteil die Stirnwand der Fahrzeugkabine und den Querträger zur Aussteifung der Instrumententafel in ein einziges Bauteil integriert, das keine Vormontageschritte erfordert, reduziert sich der Herstellungsaufwand deutlich. Bei der Herstellung des Verbundbauteils ist es ferner möglich, Halterungen, Kanäle und andere Komponenten und Funktionsbauteile der Instrumententafel und dergleichen unmittelbar in das Faserverbundhalbzeug einzuformen oder an dieses anzuspritzen, wodurch die Montage weiter vereinfacht wird. So kann beispielsweise ein Luftkanal oder ein Aufnahmeraum für einen Beifahrer-Airbag in dem Faserverbundhalbteil ausgebildet oder an dieses angespritzt werden. Auch eine Halterung für die Lenksäule oder eine Halterung für die Instrumententafel können unmittelbar in dem Faserverbundhalbteil ausgebildet oder an dieses angespritzt werden.

Vorzugsweise wird das Faserverbundhalbzeug derart geformt, dass auch die Funktion der Zitterstreben zur Vermeidung von Vibrationen unmittelbar in das Verbundbauteil integriert werden. Hierdurch ergibt sich eine weitere Reduzierung des Montageaufwandes.

Ein besonderer Vorteil des integrierten Verbundbauteils gemäß der Erfindung ist, dass das Faserverbundhalbzeug das unmittelbare Anspritzen von Kunststoffbauteilen in Kunststoff-Spritzgussverfahren erlaubt. An das Faserverbundhalbzeug kann daher auch eine Versteifungsstruktur aus Kunststoff, beispielsweise in Form von Versteifungsrippen, unmittelbar angespritzt werden, so dass das Verbundbauteil zu einem hocheigensteifen Bauteil vervollständigt werden kann, welches wenigstens dieselbe Steifigkeit erreicht wie ein herkömmlicher Querträger aus Metall.

Die Erfindung sieht auch ein Verfahren zur Herstellung eines integrierten Verbundbauteils eines Kraftfahrzeugs aus einem einteiligen Faserverbundhalbzeug aus einem faserverstärkten thermoplastischen Kunststoff vor, bei dem das einteilige Faserverbundhalbzeug erwärmt und in einem Werkzeug durch Pressen derart geformt wird, dass es eine Stirnwand der Fahrzeugkabine und einen Querträger oberhalb der Stirnwand bildet. Eine Versteifungsstruktur aus Kunststoff wird unmittelbar an das Faserverbundhalbzeug angespritzt und verbindet sich mit diesem zu einem einheitlichen hocheigensteifen Bauteil.

Ein besonders vorteilhaftes Herstellungsverfahren für ein erfindungsgemäßes Verbundbauteil mit angespritzten Komponenten, wie einer Versteifungsstruktur und/oder anderen Funktionsbauteilen aus Kunststoff, umfasst die Schritte: Erwärmen des Faserverbundhalbzeugs, beispielsweise einer thermoplastgetränkten Glasfasermatte; Einlegen des Faserverbundhalbzeugs in ein kombiniertes Press-Spritz-Werkzeug; Schließen des Werkzeugs, um das Faserverbundhalbzeug zu verpressen und dadurch in die gewünschte Form zu bringen; Anspritzen der Kunststoffkomponenten an das geformte Faserverbundhalbzeug, während das Werkzeug geschlossen bleibt; und Entnehmen des so fertig gestellten Verbundbauteils. Das Anspritzen der Kunststoffkomponenten erfolgt vorzugsweise im Schmelzbereich des Faserverbundhalbzeugs, also während dieses noch erwärmt ist, beispielsweise im Bereich von etwa 130-200°Celsius. Das Faserverbundhalbzeug selbst kann vor oder nach dem Einlegen in das Werkzeug erwärmt werden.

Durch die Kombination des gepressten Faserverbundhalbzeugs mit der angespritzter Versteifungsstruktur sowie weiteren Kunststoffkomponenten kann ein Kunststoff-Hybridbauteil hergestellt werden, welches sämtliche Eigenschaften von Stirnwand, Querträger und Zitterstreben in sich vereinigt. Zusätzlich können weitere Funktionen in das Verbundbauteil integriert werden, wie das Vorsehen eines Luftkanals, einer Aufnahme für einen Beifahrer-Airbag, einer Halterung für eine Lenksäule, eine Halterung für einen Handschuhfachkasten und dergleichen.

Ein besonderer Vorteil des erfindungsgemäßen Verbundbauteils ist, dass sich im Vergleich zu dem herkömmlichen Karosserieaufbau eine erhebliche Gewichtsersparnis erzielen lässt, die in der Größenordnung von etwa 40% - 50% liegt. Während beispielsweise bei dem heutigen Karosserieaufbau das Gesamtgewicht von Stirnwand, Querträger und Zitterstreben bei ungefähr 20 kg liegt, lässt sich das erfindungsgemäße integrierte Verbundbauteil mit einem Gesamtgewicht von etwa 12 kg realisieren. Diese Gewichtsersparnis wird ohne einen Verlust an Steifigkeit oder zusätzlichen Raumbedarf erreicht. Im Gegenteil können in das integrierte Verbundbauteil weitere Funktionen integriert werden, für die bisher zusätzliche Bauteile notwendig waren.

Das erfindungsgemäße Verbundbauteil zeichnet sich aufgrund der Fasermattenstruktur durch eine besonders gute Hitze- und Feuerbeständigkeit aus und ist in dieser Hinsicht jedenfalls gleichwertig einer Stirnwand aus Metall. Das Glasmaterial verzögert die Hitzeeinleitung in den Fahrgastraum besser als Blech.

Die Erfindung ist im Folgenden anhand einer bevorzugten Ausführung mit Bezug auf die Zeichnungen näher erläutert. In den Figuren zeigen:
- Fig. 1: eine schematische Darstellung des Frontbereichs einer Fahrzeugkabine mit einer Stirnwand und einem Querträger gemäß dem Stand der Technik;
- Fig. 2: eine schematische Darstellung des Frontbereichs einer Fahrzeugkabine mit einem Verbundbauteil gemäß der Erfindung;
- Fig. 3: eine schematische Darstellung des Verbundbauteils gemäß der Erfindung;
- Fig. 4: eine schematische Darstellung eines Ausschnittes des Verbundbauteils in der Fig. 3 mit "1" gekennzeichnet ist;
- Fig. 5: eine schematische Darstellung eines Ausschnitts des Verbundbauteils, der in Fig. 3 mit "2" gekennzeichnet ist,
- Fig. 6: eine Schnittdarstellung durch das Verbundbauteil, wobei die Schnittebene in Fig. 3 mit "3" gekennzeichnet ist; und
- Fig. 7: eine Draufsicht auf die Unterseite des Verbundbauteils, wobei die Blickrichtung in den Fig. 5 und 6 mit "A" gekennzeichnet ist.

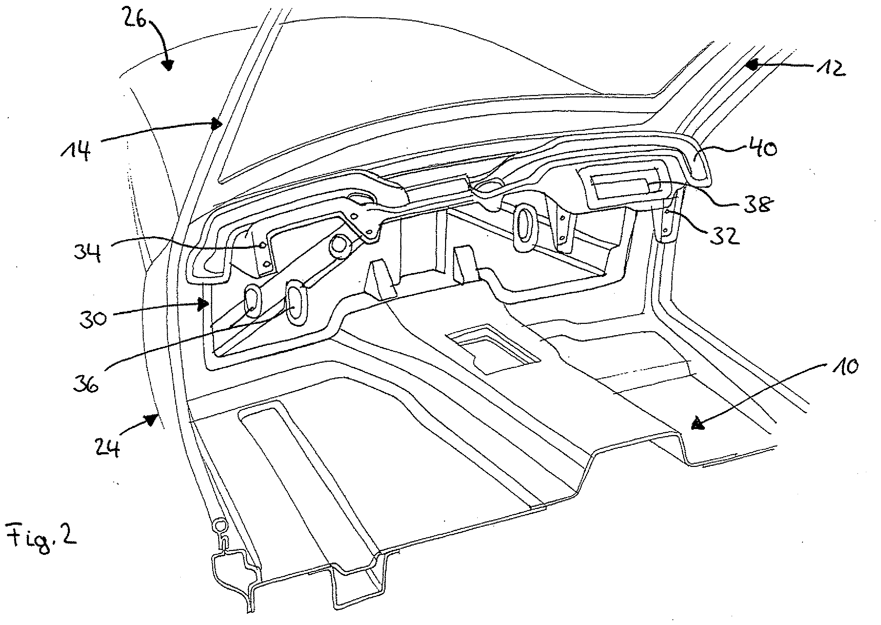

Fig. 2 zeigt schematisch den Frontbereich einer Fahrzeugkabine eines Kraftfahrzeugs mit dem Karosserieboden 10, der rechten A-Säule 12 und der linken A-Säule 14. Erfindungsgemäß ist zwischen der Fahrzeugkabine 24 und dem Motorraum 26, im Frontbereich der Fahrzeugkabine 24 ein integriertes Verbundbauteil 30 angeordnet, das die Funktionen der Stirnwand 22, des Querträgers 16 und der Zitterstreben 18, 20, welche in Fig. 1 dargestellt sind, in sich vereinigt. Das Verbundbauteil 30 bildet einerseits eine Trennwand zwischen der Fahrzeugkabine 24 und dem Motorraum 26 und ist andererseits im Bereich seines oberen Randes so geformt und verstärkt, dass es die Funktion des Querträgers zwischen den beiden A-Säulen 12, 14 zur Aussteifung einer Instrumententafel, die auf dem Verbundbauteil 30 sitzt (in den Figuren nicht gezeigt), übernimmt. Das Verbundbauteil 30 ist als ein integriertes Bauteil mit Sicken und ähnlichen Verformungen so ausgebildet, dass es auch mögliche Vibrationen der Instrumententafel ausgleicht und zum Karosserieboden 10 hin ableitet.

An das Verbundbauteil 30 sind Befestigungselemente 32, 34 sowohl für die Verbindung des Verbundbauteils 30 mit der Karosserie als auch für die Anbringung weiterer Komponenten, wie eines Handschuhfachkastens, der Instrumententafel, der Lenksäule, des Beifahrer-Airbags und dergleichen angeformt. Weiterhin sind die notwendigen Durchführungen 36 für Lenksäule, Pedale und dergleichen vorgesehen.

Ein Aufnahmeraum 38 für einen Beifahrer-Airbag ist ebenso wie ein Lüftungskanal 40 und Versteifungsstrukturen (in Fig. 2 nicht gezeigt) unmittelbar an das Verbundbauteil 30 angespritzt.

Das Verbundbauteil 30 wird aus einem Faserverbundhalbzeug hergestellt, welches erwärmt und durch Pressen in die erwünschte Form gebracht wird. Das Faserverbundhalbzeug besteht vorzugsweise aus einem Glasfaser- oder Glasmatten-verstärkten thermoplastischen Kunststoff, besonders bevorzugt aus einer thermoplastgetränkten Glasfasermatte. Hierbei kommen vorzugsweise kontinuierliche Fasern oder Endlosfasern zum Einsatz. Anstelle von Glasfasern können auch Verstärkungsfasern aus Aramid oder Kohlenstoff verwendet werden. Der thermoplastische Kunststoff kann ausgewählt werden aus der Gruppe, die besteht aus Polyamiden, Polypropylen, thermoplastischen Polyurethan, Polyetheretherketon, Polyphenylensulfid und verwandten Materialien.

Die Verwendung des Faserverbundhalbzeugs hat eine Reihe von Vorteilen. Zunächst ist es mit den aus der Kraftfahrzeugindustrie bekannten Verarbeitungsverfahren gut formbar. Es lässt sich ähnlich verarbeiten wie Bleche und bekannte Fasermatten, nämlich durch Tiefziehen, Pressen, Stanzen, Knicken oder auch Abkanten. Zum Fügen der Faserverbundhalbzeuge lassen sich bekannte Serienschweißverfahren einsetzen. Des Weiteren hat dieses Material den Vorteil, dass Kunststoffteile im Spritzgussverfahren unmittelbar an das Faserverbundhalbzeug angeformt werden können und sich mit diesem zu einem einheitlichen integrierten Verbundbauteil verbinden. Das geformte Faserverbundhalbzeug kann durch Kombination mit einer angespritzten Kunststoff-Versteifungsstruktur zu einem hocheigensteifen Bauteil vervollständigt werden. Die Kunststoffteile werden vorzugsweise in einem einheitlichen Prozess und unter Verwendung eines einzigen Press-Spritz-Werkzeuges zusammen mit dem Verbundbauteil hergestellt.

Ein weiterer Vorteil des erfindungsgemäßen Verbundbauteils ist die Gewichtsersparnis bei vergleichbar hoher Festigkeit. Die Energieaufnahme solcher Faserverbundhalbzeuge ist mindestens um den Faktor 3 höher als die von vergleichbaren Blechkonstruktionen. Dadurch kann das Gewicht gegenüber beispielsweise einer Aluminium-Bauweise um etwa 40 bis 50% reduziert werden. Noch wichtiger jedoch ist, dass es das erfindungsgemäße Verbundbauteil unter Verwendung des Faserverbundhalbzeugs erstmals ermöglicht, in ihrer Funktion ganz unterschiedliche Komponenten des Kraftfahrzeugs in einem einzeln integrierten Bauteil zu vereinigen.

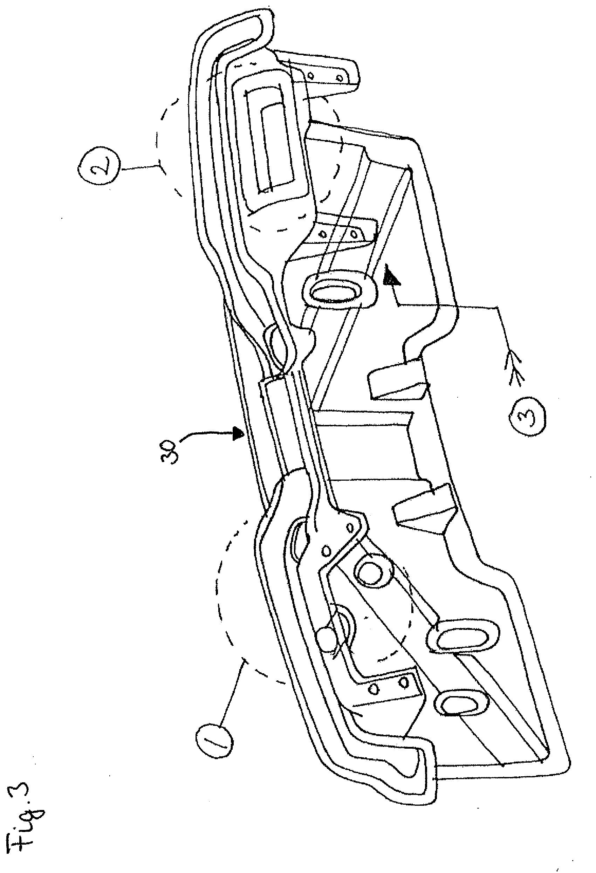

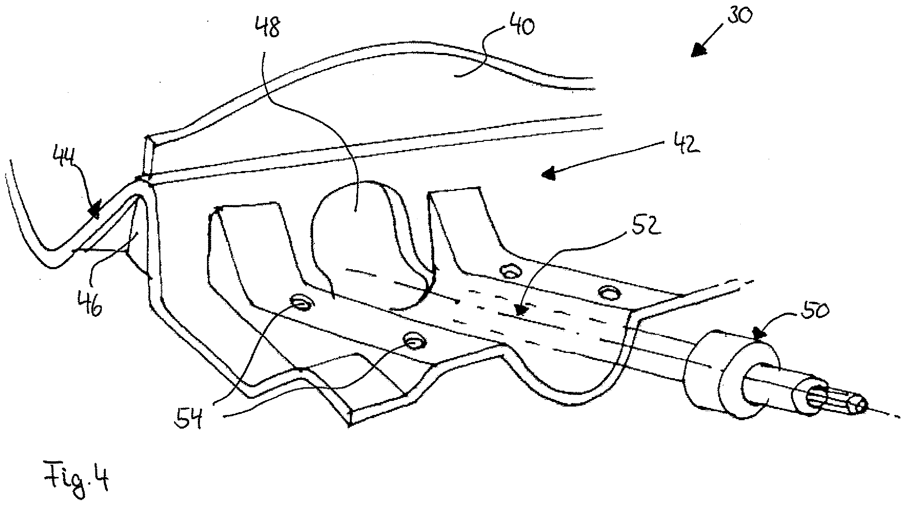

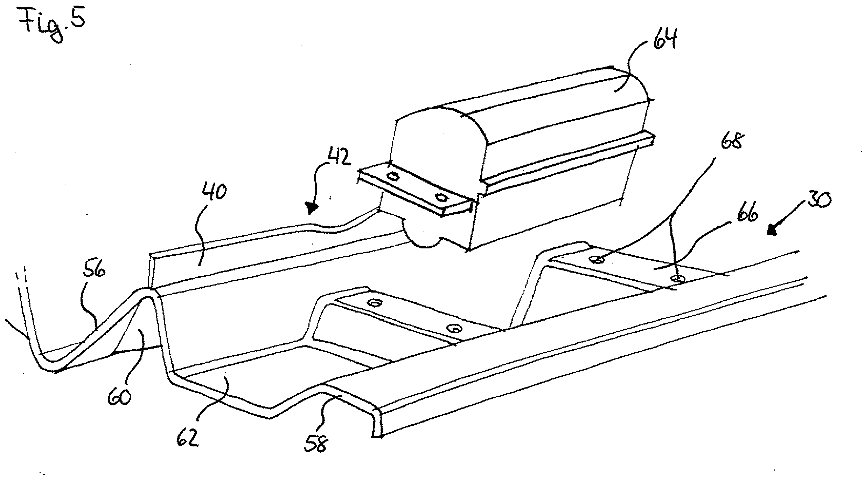

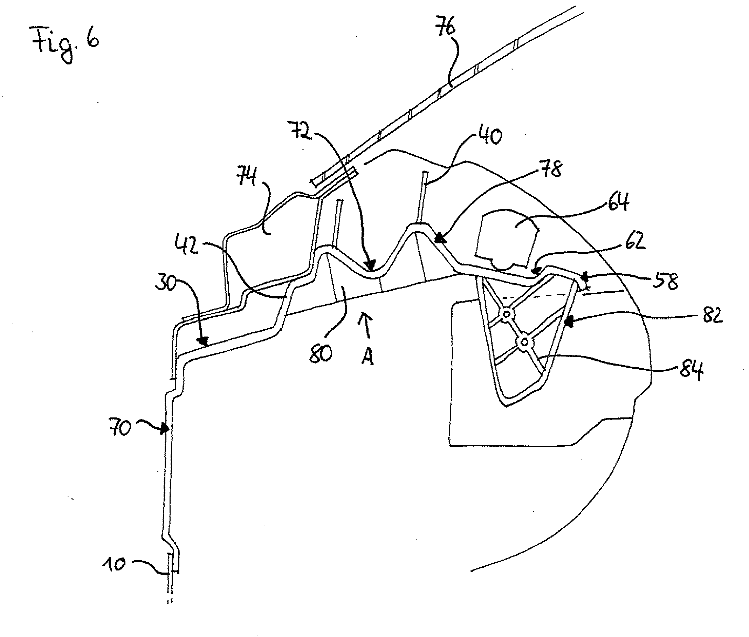

Fig. 3 zeigt eine schematische Darstellung des integrierten Verbundbauteils 30 gemäß der Erfindung, wobei der mit "1" gekennzeichnete Ausschnitt mit weiteren Einzelheiten in Fig. 4 gezeigt ist, der mit "2" gekennzeichnete Ausschnitt mit weiteren Einzelheiten in Fig. 5 gezeigt ist und eine entlang der mit "3" gekennzeichneten Schnittebene verlaufende Schnittdarstellung mit weiteren Einzelheiten in Fig. 6 gezeigt ist.

Fig. 4 zeigt einen Teil des Faserverbundhalbzeugs 42 mit einer Sicke 44, in der eine Versteifungsstruktur 46 aus Kunststoff an das Faserverbundhalbzeug angespritzt ist. Des Weiteren ist ein Teil des an das Faserverbundhalbzeug 42 angespritzten Luftkanals 40 gezeigt. In dem Verbundbauteil 30 ist eine Durchführung 48 für die Lenksäule, die durch das Bauteil 50 angedeutet ist, ausgebildet. Eine Führung und Halterung 52 für die Lenksäule 50 ist in das Faserverbundhalbzeug 42 eingeformt. Im Bereich der Halterung 52 sind ferner Befestigungsbohrungen 54 ausgebildet, welche zur Fixierung der Lenkeinrichtung dienen.

Fig. 5 zeigt eine vergrößerte Darstellung des Ausschnitts "2" aus Fig. 3 mit weiteren Einzelheiten. Wie in Fig. 5 gezeigt, sind in das Faserverbundhalbzeug 42 Sicken 56 und Abkantungen 58 eingeformt, die gemeinsam mit der Versteifungsstruktur 60 der Ausbildung eines hocheigensteifen Verbundbauteils dienen. Wie mit Bezug auf Fig. 4 beschrieben, werden die Versteifungsstruktur 60 sowie, der in Fig. 5 nur angedeutete, Luftkanal 40 im Kunststoff-Spritzgussverfahren direkt an das Faserverbundhalbzeug 42 angeformt. In dem Faserverbundhalbzeug 42 ist ein Kanal 62 zur Aufnahme eines Beifahrer-Airbagmoduls 64 ausgebildet. In dem Kanal 62 sind Halterungen 66 mit Befestigungsbohrungen 68 in das Faserverbundhalbzeug 42 eingeformt, so dass das Beifahrer-Airbagmodul 64 unmittelbar mit diesem verbunden werden kann.

Fig. 6 zeigt eine Schnittdarstellung durch das erfindungsgemäße Verbundbauteil entlang einer Schnittebene, die in Fig. 3 bei "3" angedeutet ist. In Fig. 6 ist zu erkennen, wie das integrierte Verbundbauteil 30 die Stirnwand 70 an der Front der Fahrzeugkabine und den Querträger 72 oberhalb der Stirnwand 70 bildet. Der Stirnwand 70 des Verbundbauteils 30 liegt zwischen den Karosserieboden 10 und einem Querholm 74, der unterhalb der Windschutzscheibe 76 des Fahrzeuges verläuft und trennt die Fahrzeugkabine vom Motorraum. Der Querträgerteil 72 des Verbundbauteils 30 ist, wie oben beschrieben, mit Sicken 78 als ein hocheigensteifes Bauteil ausgebildet. Die Versteifungsstruktur 80 ist im Kunststoff-Spritzgussverfahren unmittelbar an das Faserverbundhalbzeug 42 angeformt. Auch der Kanal 62 zur Aufnahme des Beifahrer-Airbagmoduls 64 ist in Fig. 6 zu erkennen.

An das Faserverbundhalbzeug 42 sind Halterungen 82 zur Befestigung des Handschuhfachkastens (in den Figuren nicht gezeigt) angeformt. Diese Halterungen 82 sind ebenfalls als Kunststoff-Spritzgussteil mit einer der Versteifung dienenden Rippenstruktur 84 gebildet. An den Halterungen 82 sind Befestigungsbohrungen zur Fixierung des Handschuhfachkastens ausgebildet, die in Fig. 2 mit dem Bezugszeichen 32 gekennzeichnet sind.

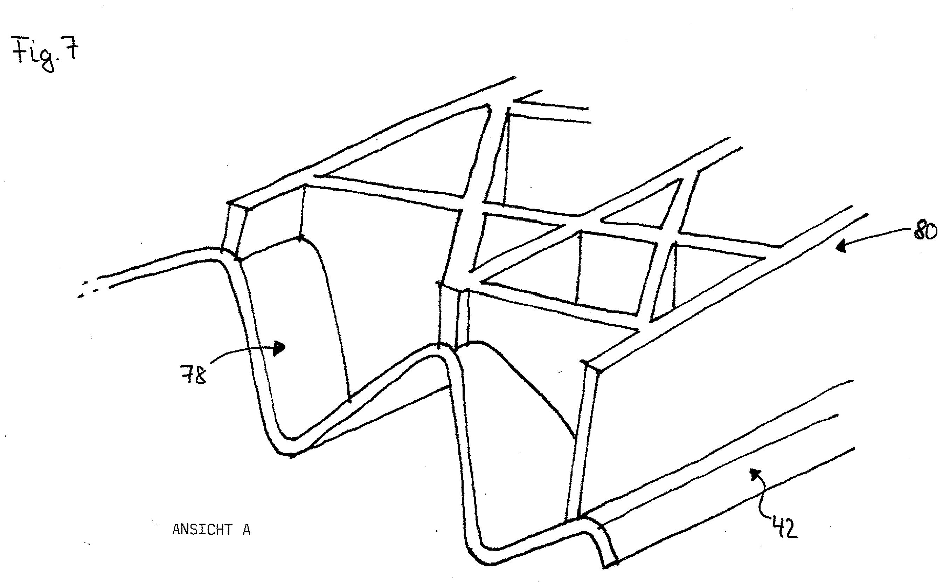

Fig. 7 zeigt eine Draufsicht auf die Versteifungsstruktur 80 aus der in Fig. 6 mit "A" bezeichneten Blickrichtung. Durch die spezielle Formgebung des Querträgerteils 72 des Faserverbundhalbzeugs 42 in Verbindung mit der unmittelbar an das Faserverbundhalbzeug 42 angeformten Kunststoff-Versteifungsstruktur 80 entsteht ein hocheigensteifes Bauteil, das der Aussteifung der Instrumententafel dient und Vibrationen ausgleicht.

Zur Herstellung des Verbundbauteils mit den angespritzten Kunststoffkomponenten, wie den Befestigungselementen 32, den Durchführungen 36, 48, dem Aufnahmeraum für den Beifahrer-Airbag 38, den Luftkanal 40, die Versteifungsstrukturen 46, 60, 80, die Halterungen 82, die Rippenstruktur 84 und/oder anderen Funktionsbauteilen aus Kunststoff, wird das Faserverbundhalbzeug zunächst in oder außerhalb eines kombinierten Press-Spritz-Werkzeugs erwärmt und anschließend in dem Werkzeug durch Pressen in die gewünschte Form gebracht. Die Kunststoffkomponenten werden anschließend an das geformte Faserverbundhalbzeug angespritzt, während das Werkzeug noch geschlossen und das Faserverbundhalbzeug noch erwärmt ist. Dann wird das so fertig gestellte Verbundbauteil aus dem Werkzeug entnommen. Das Anspritzen der Kunststoffkomponenten erfolgt vorzugsweise im Schmelzbereich des Faserverbundhalbzeugs, beispielsweise im Bereich von etwa 130-200°Celsius.

### Bezugszeichenliste:

- 10: Karosserieboden
- 12, 14: A-Säule
- 16: Querträger
- 18, 20: Zitterstreben
- 22: Stirnwand
- 24: Fahrzeugkabine
- 26: Motorraum
- 30: integriertes Verbundbauteil
- 32, 34: Befestigungselemente
- 36: Durchführungen
- 38: Aufnahmeraum für Beifahrer-Airbag
- 40: Luftkanal
- 42: Faserverbundhalbzeug
- 44: Sicke
- 46: Versteifungsstruktur
- 48: Durchführung
- 50: Lenksäule
- 52: Führung und Halterung
- 54: Befestigungsbohrungen
- 56: Sicken
- 58: Abkantung
- 60: Versteifungsstruktur
- 62: Kanal
- 64: Beifahrer-Airbagmodul
- 66: Halterungen
- 68: Befestigungsbohrungen
- 70: Stirnwand
- 72: Querträger
- 74: Querholm
- 76: Windschutzscheibe
- 78: Sicken
- 80: Versteifungsstruktur
- 82: Halterungen
- 84: Rippenstruktur

## Patentansprüche

1. Integriertes Verbundbauteil (30) eines Kraftfahrzeugs, das aus einem einteiligen Faserverbundhalbzeug (42) aus einem faserverstärkten thermoplastischen Kunststoff derart geformt ist, dass es eine Stirnwand (70) der Fahrzeugkabine und einen Querträger (72) oberhalb der Stirnwand (70) bildet, **dadurch gekennzeichnet, dass** Versteifungsrippen (84) aus Kunststoff unmittelbar an das Faserverbundhalbzeug (42) angespritzt sind und sich mit diesem zu einem einheitlichen hocheigensteifen Bauteil verbinden; und dass eine Halterung (32, 34) für eine Instrumententafel in dem Faserverbundhalbteil ausgebildet oder an dieses angespritzt ist, wobei der Querträger (72) zur Aussteifung der Instrumententafel dient.

2. Verbundbauteil (30) nach Anspruch 1, bei dem das Faserverbundhalbzeug (42) aus einer thermoplastgetränkten Glasfasermatte hergestellt ist.

3. Verbundbauteil (30) nach Anspruch 1 oder 2, bei dem der thermoplastische Kunststoff ausgewählt ist aus Polyamiden, Polypropylen, thermoplastischem Polyurethan, Polyetheretherketon, Polyphenylensulfid.

4. Verbundbauteil (30) nach einem der vorangehenden Ansprüche, bei dem das Faserverbundhalbzeug (42) Verstärkungsfasern aus Glas, Kohlenstoff oder Aramid aufweist.

5. Verbundbauteil (30) nach Anspruch 4, bei dem die Verstärkungsfasern Endlosfasern oder Gewebe sind.

6. Verbundbauteil (30) nach einem der vorangehenden Ansprüche, bei dem das Faserverbundhalbzeug (42) derart geformt ist, dass es ferner wenigstens eine Zitterstrebe zur Vermeidung von Vibrationen, die auf das Verbundbauteil wirken, ersetzt.

7. Verbundbauteil (30) nach einem der vorangehenden Ansprüche, wobei in der Instrumententafel des Kraftfahrzeuges vorgesehene Komponenten aus Kunststoff, wie ein Luftkanal (40), ein Aufnahmeraum (62) für einen Beifahrer-Airbag und eine Halterung (52) für die Lenksäule (50), unmittelbar an das Faserverbundhalbzeug (42) angespritzt sind und sich mit diesem zu einem einheitlichen Bauteil verbinden.

8. Verfahren zur Herstellung eines integrierten Verbundbauteils (30) eines Kraftfahrzeugs aus einem einteiligen Faserverbundhalbzeug (42) aus einem faserverstärkten thermoplastischen Kunststoff, wobei das einteilige Faserverbundhalbzeug (42) erwärmt und in einem Werkzeug durch Pressen derart geformt wird, dass es eine Stirnwand (70) der Fahrzeugkabine und einen Querträger (72) oberhalb der Stirnwand (70) bildet, und **dadurch gekennzeichnet, dass** Versteifungsrippen (84) aus Kunststoff unmittelbar an das Faserverbundhalbzeug (42) angespritzt werden und sich mit diesem zu einem einheitlichen hocheigensteifen Bauteil verbinden; und dass eine Halterung (32, 34) für eine Instrumententafel in dem Faserverbundhalbteil ausgebildet oder an dieses angespritzt wird, wobei der Querträger (72) zur Aussteifung der Instrumententafel dient.

9. Verfahren nach Anspruch 8, bei dem das Faserverbundhalbzeug (42) aus einer thermoplastgetränkten Glasfasermatte hergestellt wird.

10. Verfahren nach Anspruch 8 oder 9, bei dem das Werkzeug nach dem Pressen des Faserverbundhalbzeugs (42) geschlossen bleibt, während die Versteifungsrippen (84) aus Kunststoff an das Faserverbundhalbzeug (42) angespritzt werden.

11. Verfahren nach einem der Ansprüche 8 bis 10, wobei in der Instrumententafel des Kraftfahrzeuges vorgesehene Strukturen aus Kunststoff, wie ein Luftkanal (40), ein Aufnahmeraum (62) für einen Beifahrer-Airbag und eine Halterung (52) für die Lenksäule (50), unmittelbar an das Faserverbundhalbzeug (42) angespritzt werden und sich mit diesem zu einem einheitlichen Bauteil verbinden, während das Werkzeug nach dem Pressen des Faserverbundhalbzeugs (42) geschlossen bleibt.

12. Verfahren nach einem der Ansprüche 8 bis 11, bei dem die Kunststoffstrukturen an das Faserverbundhalbzeug angespritzt werden, während es auf seine Schmelzpunkttemperatur erwärmt ist.

13. Verfahren nach einem der Ansprüche 8 bis 12, bei dem das Faserverbundhalbzeug (42) derart geformt wird, dass es ferner wenigstens eine Zitterstrebe zur Vermeidung von Vibrationen, die auf das Verbundbauteil wirken, ersetzt.

## Claims

1. An integrated composite component (30) of a motor vehicle which is formed of a one-piece semi-finished fibre composite product (42) of a fibre-reinforced thermoplastic plastic in a manner such that it forms a firewall (70) of the vehicle cabin and a cross-beam (72) above the firewall (70), **characterized in that** reinforcing ribs (84) formed of plastic are moulded directly onto the semi-finished fibre composite product (42) and together with it form a highly inherently rigid unitary component; and **in that** a bracket (32, 34) for an instrument panel is formed in the semi-finished fibre composite product or is moulded onto it, whereupon the cross-beam (72) acts to reinforce the instrument panel.

2. The composite component (30) as claimed in claim 1, in which the semi-finished fibre composite product (42) is made from a thermoplastic-impregnated glass fibre mat.

3. The composite component (30) as claimed in claim 1 or claim 2, in which the thermoplastic plastic is selected from polyamides, polypropylene, thermoplastic polyurethane, polyether ether ketone and polyphenylene sulphide.

4. The composite component (30) as claimed in one of the preceding claims, in which the semi-finished fibre composite product (42) is provided with reinforcing fibres of glass, carbon or aramid.

5. The composite component (30) as claimed in claim 4, in which the reinforcing fibres are continuous filaments or textiles.

6. The composite component (30) as claimed in one of the preceding claims, in which the semi-finished fibre composite product (42) is shaped in a manner such that it furthermore replaces at least one strut for preventing vibrations which act on the composite component.

7. The composite component (30) as claimed in one of the preceding claims, wherein components formed from plastic provided in the instrument panel of the motor vehicle, such as an air duct (40), a compartment (62) for a passenger airbag and a bracket (52) for the steering column (50), are moulded directly onto the semi-finished fibre composite product (42) and join together with it to form a unitary component.

8. A method for the manufacture of an integrated composite component (30) of a motor vehicle which is formed of a one-piece semi-finished fibre composite product (42) of a fibre-reinforced thermoplastic plastic, wherein the one-piece semi-finished fibre composite product (42) is heated and pressed in a tool in a manner such that it forms a firewall (70) for the vehicle cabin and a cross-beam (72) above the firewall (70), and **characterized in that** reinforcing ribs (84) formed of plastic are moulded directly onto the semi-finished fibre composite product (42) and together with it form a highly inherently rigid unitary component; and **in that** a bracket (32, 34) for an instrument panel is formed in the semi-finished fibre composite product or is moulded onto it, whereupon the cross-beam (72) acts to reinforce the instrument panel.

9. The method as claimed in claim 8, in which the semi-finished fibre composite product (42) is made from a thermoplastic-impregnated glass fibre mat.

10. The method as claimed in claim 8 or claim 9, in which after pressing the semi-finished fibre composite product (42), the tool remains closed while the reinforcing ribs (84) formed of plastic are moulded onto the semi-finished fibre composite product (42).

11. The method as claimed in one of claims 8 to 10, wherein structures formed from plastic provided in the instrument panel of the motor vehicle, such as an air duct (40), a compartment (62) for a passenger airbag and a bracket (52) for the steering column (50), are moulded directly onto the semi-finished fibre composite product (42) and join together with it to form a unitary component while the tool remains closed after pressing the semi-finished fibre composite product (42).

12. The method as claimed in one of claims 8 to 11, in which the plastic structures are moulded onto the semi-finished fibre composite product while it is heated to its softening temperature.

13. The method as claimed in one of claims 8 to 12, in which the semi-finished fibre composite product (42) is formed in a manner such that it furthermore replaces at least one strut for preventing vibrations which act on the composite component.

## Revendications

1. Composant composite intégré (30) d'un véhicule à moteur, qui est constituée d'un produit semi-fini composite à fibres (42) d'une seule pièce en matière plastique thermoplastique renforcée par des fibres, de façon à former une paroi frontale (70) de la cabine du véhicule et une traverse (72) au-dessus de la paroi frontale (70), **caractérisé en ce que** des nervures de renfort (84) en matière plastique sont directement injectées sur le produit semi-fini composite à fibres (42) et se lient à celui-ci afin d'obtenir un composant monobloc avec une grande rigidité ;
et **en ce qu'**un support (32, 34) pour un tableau de bord est réalisé dans le produit semi-fini composite à fibres ou injecté sur celui-ci, la traverse (72) permettant de rigidifier le tableau de bord.

2. Composant composite (30) selon la revendication 1, dans lequel le produit semi-fini composite à fibres (42) est constitué d'une natte en fibres de verre imprégnée de thermoplastique.

3. Composant composite (30) selon la revendication 1 ou 2, dans lequel la matière plastique thermoplastique est sélectionnée parmi des polyamides, du polypropylène, du polyuréthane thermoplastique, de la polyétheréthercétone, du sulfure de polyphényle.

4. Composant composite (30) selon l'une des revendications précédentes, dans lequel le produit semi-fini composite à fibres (42) comprend des fibres de renfort en verre, carbone, ou aramide.

5. Composant composite (30) selon la revendication 4, dans lequel les fibres de renfort sont des fibres sans fin ou une toile.

6. Composant composite (30) selon l'une des revendications précédentes, dans lequel le produit semi-fini composite à fibres (42) est formé de façon à ce qu'il remplace en outre au moins une entretoise stabilisatrice permettant d'éviter les vibrations qui agissent sur le composant composite.

7. Composant composite (30) selon l'une des revendications précédentes, les composants en matière plastique prévus dans le tableau de bord du véhicule à moteur, comme un canal d'aération (40), un espace de logement (62) pour un airbag passager et un support (52) pour la colonne de direction (50), sont injectés directement sur le produit semi-fini composite à fibres (42) et se lient avec celui-ci afin d'obtenir un composant unique.

8. Procédé de fabrication d'un composant composite intégré (30) à d'un véhicule à moteur, à partir d'un produit semi-fini composite à fibres (42) d'une seule pièce constitué d'une matière plastique thermoplastique renforcée par des fibres, le produit semi-fini composite à fibres (42) d'une seule pièce étant chauffé et formé dans un outil par pressage de façon à constituer une paroi frontale (70) de la cabine du véhicule et une traverse (72) au-dessus de la paroi frontale (70) et **caractérisé en ce que** des nervures de renfort (84) en matière plastique sont injectées directement sur le produit semi-fini composite à fibres (42) et se lient avec celui-ci afin d'obtenir un composant unique d'une grande rigidité ;
et **en ce qu'**un support (32, 34) pour un tableau de bord est réalisé dans le produit semi-fini composite à fibres ou injecté sur celui-ci, la traverse (72) permettant de rigidifier le tableau de bord.

9. Procédé selon la revendication 8, dans lequel le produit semi-fini composite à fibres (42) est constitué d'une natte en fibres de verre imprégnée de thermoplastique.

10. Procédé selon la revendication 8 ou 9, dans lequel l'outil reste fermé après le pressage du produit semi-fini composite à fibres (42), tandis que les nervures de renfort (84) en matière plastique sont injectées sur le produit semi-fini composite à fibres (42).

11. Procédé selon l'une des revendications 8 à 10, les structures en matière plastique prévues dans le tableau de bord du véhicule à moteur, comme un canal d'aération (40), un espace de logement (62) pour un airbag passager et un support (52) pour la colonne de direction (50), sont injectés directement sur le produit semi-fini composite à fibres (42) et se lient avec celui-ci afin d'obtenir un composant unique, tandis que l'outil reste fermé après le pressage du produit semi-fini composite à fibres (42).

12. Procédé selon l'une des revendications 8 à 11, dans lequel les structures en matière plastique sont injectées sur le produit semi-fini composite à fibres tandis qu'il est chauffé à sa température de fusion.

13. Procédé selon l'une des revendications 8 à 12, dans lequel le produit semi-fini composite à fibres (42) est formé de façon à ce qu'il remplace en outre au moins une entretoise stabilisatrice permettant d'éviter les vibrations qui agissent sur le composant composite.
